Europäisches Patentamt

(19) European Patent Office

Office européen des brevets

(11) Numéro de publication: **0 158 375**

**A1**

## (12) DEMANDE DE BREVET EUROPEEN

(21) Numéro de dépôt: 85200281.5

(22) Date de dépôt: 28.02.85

(51) Int. Cl.⁴: **B 60 P 3/22**

(30) Priorité: 26.03.84 BE 2060375

(43) Date de publication de la demande:
16.10.85 Bulletin 85/42

(84) Etats contractants désignés:
DE FR GB NL

(71) Demandeur: Van Hool, naamloze vennootschap
Bernard Van Hoolstraat 58
B-2578 Lier(BE)

(72) Inventeur: van Hool, Jozef Karel
Liersebaan 235
B-2578 Lier(BE)

(74) Mandataire: Donné, Eddy
M.F.J.Bockstael Arenbergstraat 13
B-2000 Anvers(BE)

(54) Conteneur-citerne pour camions-citernes.

(57) Conteneur-citerne pour camion-citerne, caractérisé en ce que sur la premièr extrémité de la citerne est articulé un vérin culbuteur (12) pourvu en sa partie inférieure d'un mécanisme d'accouplement (19) conçu pour être connecté à un châssis roulant 11 afin de former un point d'appui approprié pour le vérin culbuteur, et en ce que la seconde extrémité de la citerne- conteneur (1) est munie de dispositifs en forme de tenons ou de chevilles (35-36) pivotant dans des mortaises (37-38) dont est équipé le châssis roulant (11) susmentionné, et formant ainsi les points d'articulation du conteneur- citerne (1).

Fig.1

EP 0 158 375 A1

/

**"Conteneur-citerne pour camions-citernes"**

La présente invention concerne un conteneur-citerne pour camions-citernes. Il s'agit, en d'autres termes, d'une citerne universelle manipulable comme un conteneur.

Le camion-citerne de conception classique, combinant un réservoir de type traditionnel avec un châssis roulant conventionnel, muni ou non d'un dispositif de bascule, est suffisamment connu.

Le principal désavantage de ce type traditionnel de camion-citerne est que la tare de l'ensemble est considérablement supérieure à celle des modèles spécialisés classiques, qui prévoient une citerne et un châssis roulant spécifiquement adaptés l'un à l'autre.

La présente invention propose dès lors un modèle de camion-citerne, qui associe traditionnellement le conteneur-citerne classique, le châssis roulant et un dispositif de bascule éventuel de façon à conserver tous les avantages offerts par les conteneurs-citernes éventuellement basculables, mais dont la conception est telle que, quelle que soit l'application, la tare finale de l'ensemble atteint un niveau minimum approximativement égal à la tare des modèles spécialisés précitées.

Une première manière de satisfaire à ces exigences consiste, selon la présente invention, à prévoir dans le cas d'un conteneur-citerne basculant un dispositif culbuteur — regroupant le vérin culbuteur et les accessoires connexes — qui fasse partie intégrante de la citerne même, de telle sorte que le poids du dispositif culbuteur ne doive être déplacé que lorsqu'il est utilisé.

Une deuxième technique à mettre en oeuvre selon la présente invention pour parvenir au résultat exposé ci-dessus consiste à pourvoir chaque côté avant et arrière de la citerne d'élargissements en forme de tunnels, servant à absorber les forces latérales de façon à permettre une réduction sensible du poids du châssis roulant et, partant, de la tare de l'ensemble.

Le conteneur-citerne offrant les avantages exposés ci-dessus selon la présente invention se distingue essentiellement par les caractéristiques suivantes: sur la première extrémité de la citerne est articulé un vérin culbuteur 12 pourvu en sa partie inférieure d'un mécanisme d'accouplement 19 conçu pour être connecté à un châssis roulant 11 afin de former un point d'appui approprié pour le vérin culbuteur; la seconde extrémité de la citerne-conteneur 1 est munie de dispositifs en forme de tenons ou de chevilles (35-36) pivotant dans des mortaises 37-38 dont est équipé le châssis roulant 11 susmentionné, et formant ainsi les points d'articulation du conteneur-citerne 1.

Afin d'illustrer avec davantage de précision les caractéristiques de la présente invention, l'exemple ci-dessous, auquel il ne faut attacher aucun caractère limitatif, en décrit une version "idéale" en référant aux schémas en annexe, dont:

la Figure 1 présente une vue latérale d'un conteneur-citerne conforme à la présente invention;

la Figure 2 présente une vue de dessus de la Figure 1;

les Figures 3 et 4 présentent respectivement une vue frontale et postérieure de la Figure 1;

la Figure 5 présente une vue identique à celle de la Figure 1, sur laquelle le conteneur-citerne même est toutefois séparé du châssis roulant;

la Figure 6 est une vue identique à celle de la Figure 1, sur laquelle le conteneur-citerne se trouve toutefois en position basculée;

la Figure 7 présente une coupe à échelle agrandie, suivant l'axe VII-VII de la Figure 1;

la Figure 8 présente une vue suivant le sens de la flèche F8 de la Figure 7;

la Figure 9 présente une vue suivant l'axe IX-IX de la Figure 5;

la Figure 10 présente une vue avec coupe partielle suivant le sens de la flèche F10 de la Figure 8;

la Figure 11 présente une coupe à échelle agrandie, suivant l'axe XI-XI de la Figure 6;

la Figure 12 présente une vue suivant le sens de la flèche F12 de la Figure 11;

la Figure 13 présente une vue avec coupe partielle suivant le sens de la flèche F13 de la Figure 12;

la Figure 14 présente une vue de la partie indiquée à la Figure 1 par F14;

la Fig.15 présente une vue de dessus de la Figure 14.

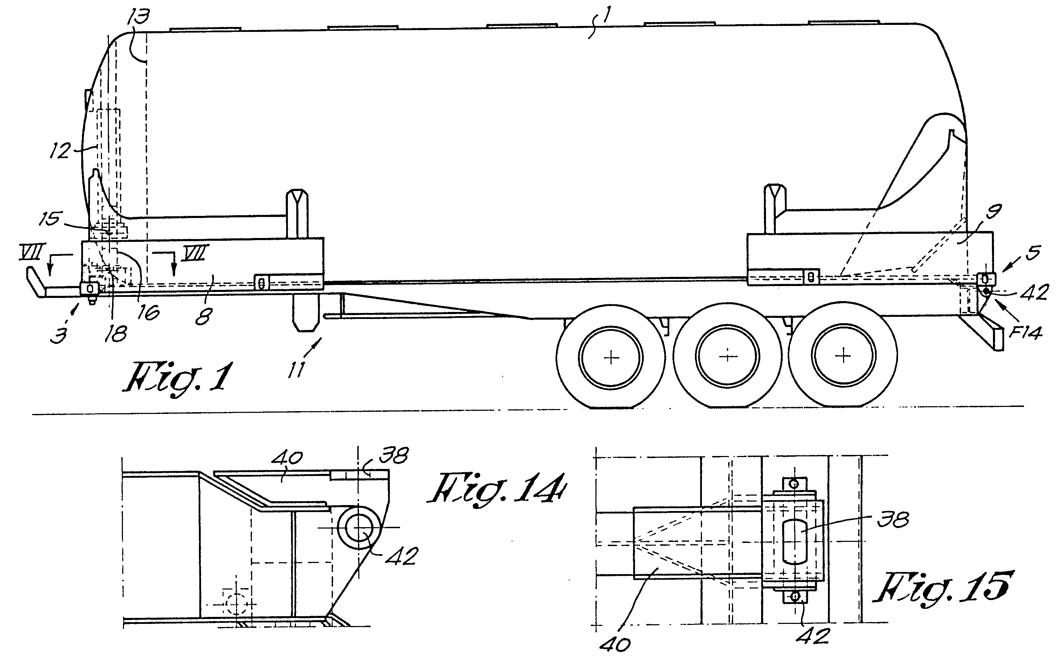

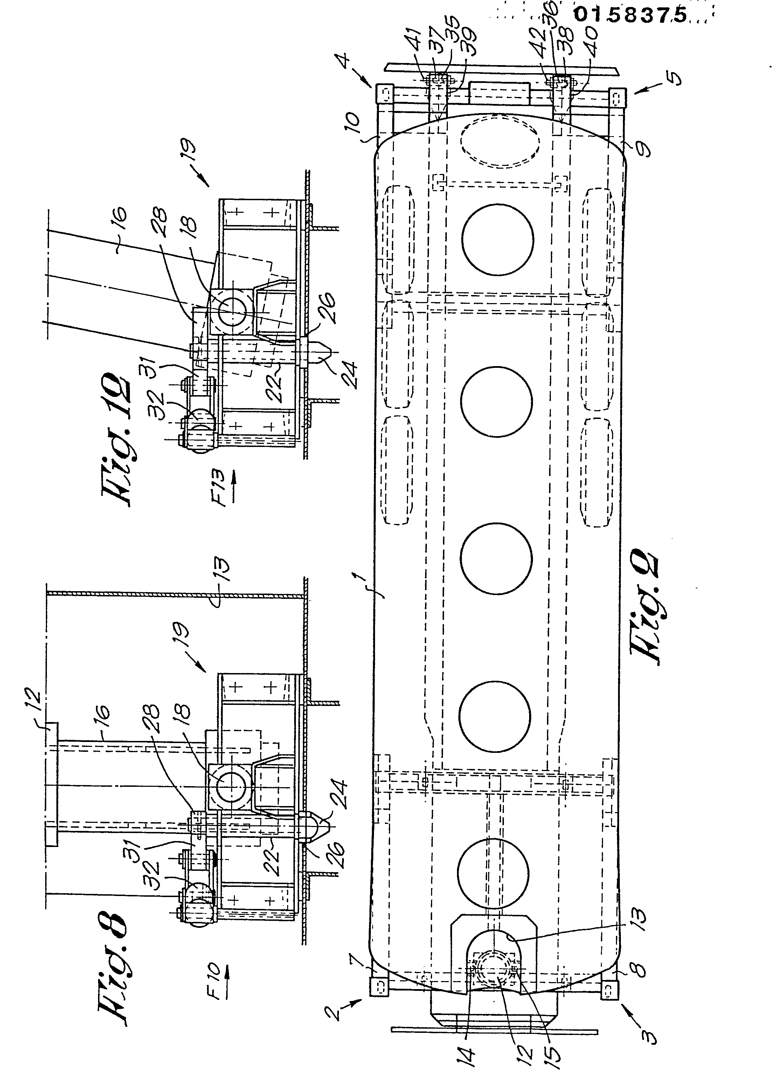

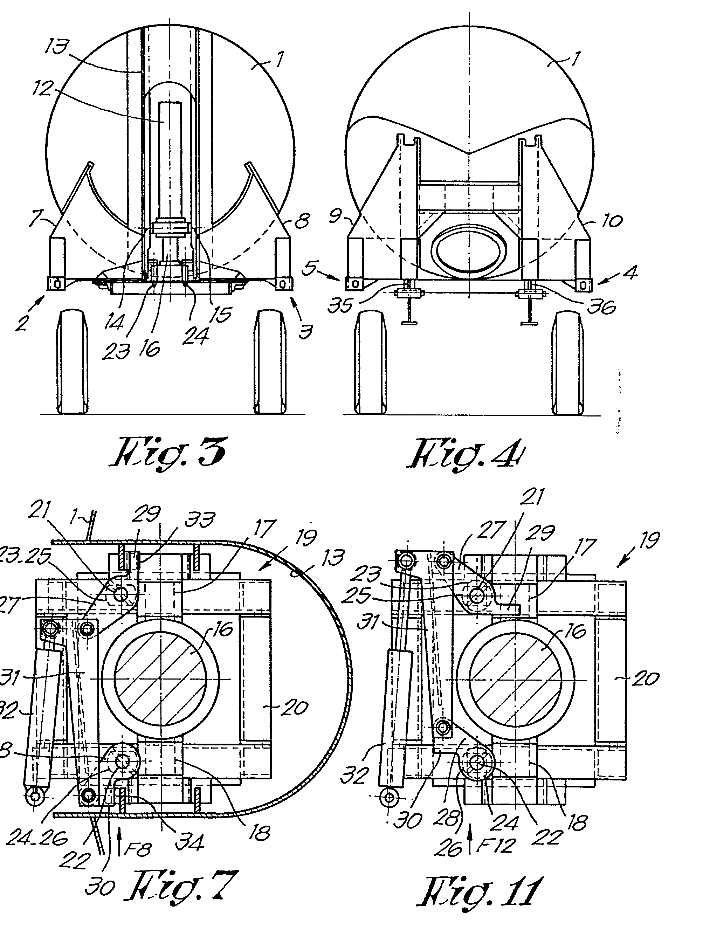

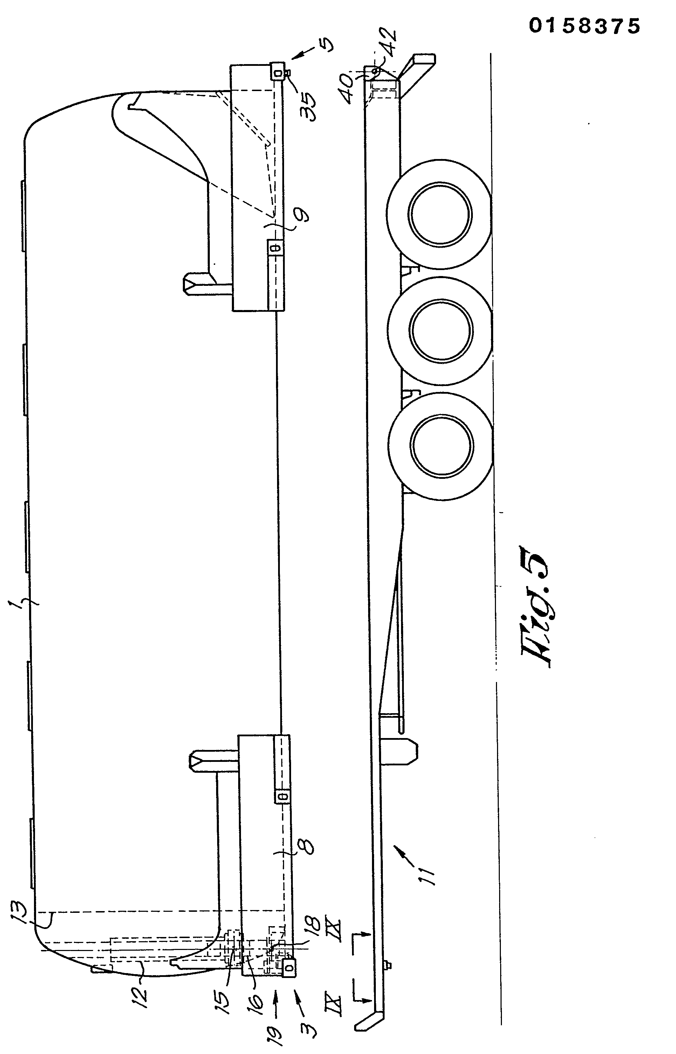

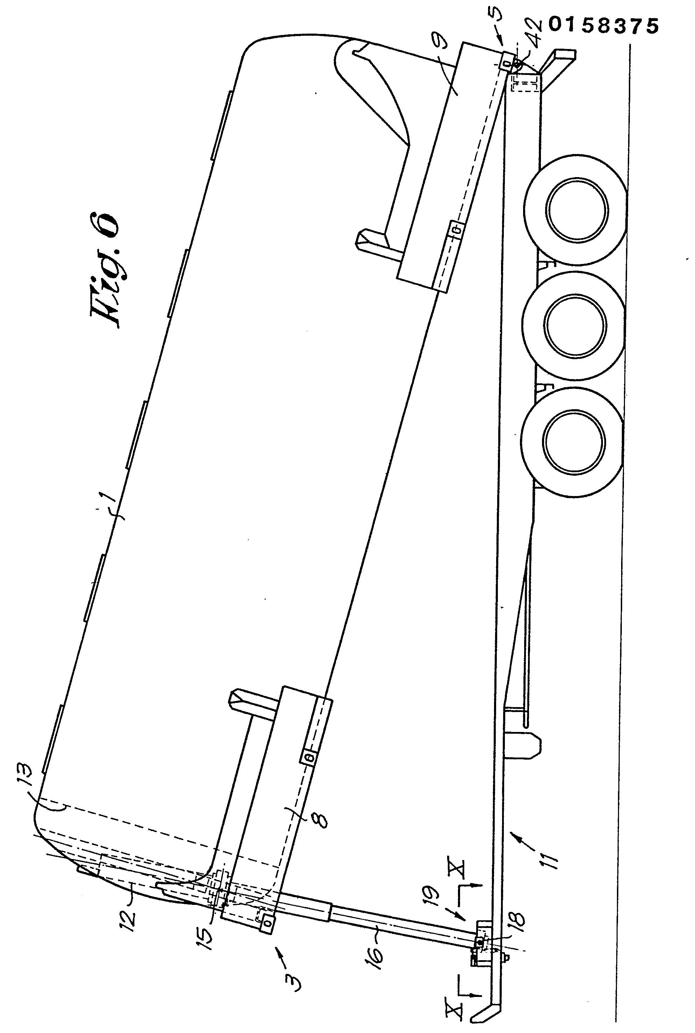

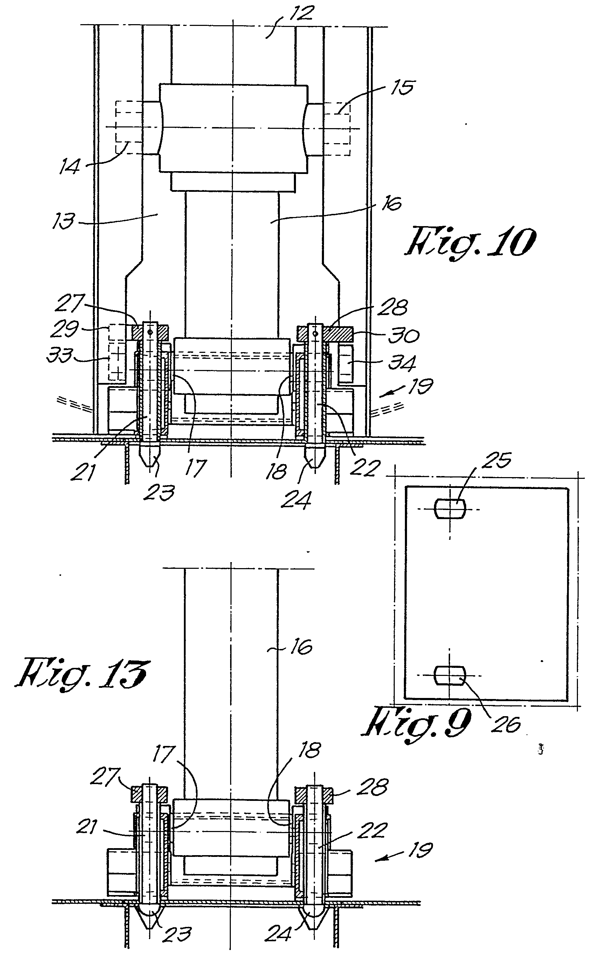

Comme l'illustre les schémas, le conteneur-citerne de la présente invention se compose principalement d'une citerne 1 proprement dit, de n'importe quelle forme, mais munies, à ses angles tout au moins, de dispositifs (respectivement 2-3 et 4-5) d'un type similaire aux coins d'un conteneur traditionnel, de façon à permettre la manipulation de la citerne 1 comme un conteneur.

Dans la version de la présente invention, les dispositifs 2 à 5 sont assortis chacun, à hauteur des angles de la citerne 1, d'un élément en forme de tunnel (7-8 et 9-10, respectivement). Ces éléments en tunnel 7-8 et 9-10 constituent pour la citerne proprement dit, et en combinaison éventuelle avec des nervures de renforcement ou autres, un renfort qui absorbe les forces latérales auxquelles ce véhicule est soumis, de façon à autoriser une réduction sensible du poids du châssis roulant 11, par rapport aux constructions traditionnelles et, ce faisant, à obtenir un poids total à vide de l'ensemble formé par le réservoir 1 et le châssis 11 inférieur à celui des modèles existants similaires de structures combinées.

Par ailleurs, la version du conteneur-citerne de la présente invention est exécutée de façon à ce que le vérin culbuteur et les accessoires de bascule associés soient solidaires du conteneur-citerne 1.

0158375

On peut, à cet effet, regrouper la pompe, le réservoir d'huile et autres composants connexes dans l'un des tunnels 7 à 10 précités tout en installant le vérin culbuteur proprement dit dans un logement vertical 13 situé à l'extrémité antérieure de la citerne et décrivant, en coupe horizontale, une forme en U approximative.

Le vérin culbuteur 12 s'articule de façon appropriée sur deux tourillons, 14 et 15, dans le logement 13 ; il s'articule en outre, par l'intermédiaire de la partie inférieure du logement et de l'extrémité libre de sa tige de piston 16, via des tourillons 17 et 18 par exemple, sur un mécanisme d'accouplement 19 qui, tout comme le vérin culbuteur 12, reste solidaire de la citerne 1.

Comme dans le cas des tunnels 7 à 10 susnommés et de l'ensemble du vérin culbuteur, ce mécanisme d'accouplement peut revêtir diverses formes; toutefois, dans la version illustrée par les schémas, il se compose d'un châssis 20 dans lequel sont logés les tourillons 17 et 18, ce châssis étant pourvu de deux tenons pivotants 21 et 22, montés dans le châssis et dotés en leur partie inférieure d'une tête transverse.(23 et 24) s'adaptant dans les mortaises correspondantes (25 et 26, respectivement) du châssis mobile, de telle façon que, dans une position, les tenons pénètrent librement dans les mortaises 25-26 et que, si les tenons 21-22 opèrent une rotation de 90°, leur tête 23-24 soient verrouillées dans le châssis 11.

Les tenons 21-22 sont munis chacun à leur extrémité supérieure d'un levier, 27 et 28 respectivement, qui présente individuellement une saillie, respectivement 29 et 30; ces leviers 27 et 28 s'articulent sur un levier commun 31, attaché à son tour par articulation à la tige du piston d'un cylindre presseur 32 relié au châssis 20 du mécanisme d'accouplement 19.

6

0158375

Les logements précités comportent par ailleurs des butées 33 et 34 associées, dans une certaine position, aux saillies 29 et 30 des leviers 27-28.

Enfin, le conteneur proprement dit est également pourvu en sa partie postérieure de deux tenons ou ergots, 35 et 36 respectivement, qui, lorsque la citerne 1 est installée sur le châssis 11, s'enchâssent dans des orifices, 37 et 38 respectivement, dont sont dotées les parties 39 et 40 du châssis 11, lesquelles sont articulées sur le châssis 11 par l'intermédiaire de pivots 41 et 42.

Il est clair que l'on obtient, de cette façon un véhicule-citerne dont le châssis 11 permet, d'une part, la fixation conventionnelle par "twist-locks" de divers types de conteneurs de transport et autorise d'autre part, dans le cas d'un camion citerne à conteneur 1 tel qu'illustré sur les schémas en annexe, l'installation aisée du conteneur sur le châssis 11 par insertion des ergots 35 et 36 dans les orifices 37 et 38, après quoi il est encore possible de parfaire, en certains endroits, la fixation de ce type de citerne au châssis 11 à l'aide des fermetures de type "twist-locks" citées précédemment.

Etant donné la présence dans le logement 13 des butées 33-34 précitées, le mécanisme d'accouplement repose sur ces butées par l'intermédiaire des saillies 29 et 30 des leviers 27 et 28, lorsque le vérin culbuteur est en position de retrait; en revanche, lorsqu'il y a basculement, les ergots enchâssés dans les orifices 25 et 26 du châssis 11 opèrent une rotation sous l'action du cylindre presseur 32, de sorte que le mécanisme d'accouplement 19 se libère de la citerne 1 et que, simultanément, ce même mécanisme vient se connecter au châssis 11 par l'intermédiaire des têtes 23-24 des tenons 21-22, vu que ces têtes rectangulaires 23-24 opèrent une rotation dans les orifices rectangulaires 25-26 du châssis 11.

Le basculement proprement dit est rendu possible par le fait que la citerne 1 est reliée par les ergots 35 et 36 aux éléments 39 et 40 du châssis 11 qui forment en quelque sorte l'articulation entre la citerne 1 et le châssis 11.

Il va sans dire que le véhicule à citerne conçu selon ces techniques possède une haute polyvalence; de même, non seulement son "poids mort" est idéal pour toutes sortes d'applications, mais, grâce à la construction spécifique du conteneur-citerne, son châssis peut également être construit plus léger, ce qui se traduit par une réduction du poids total par rapport aux exécutions conventionnelles.

La présente invention ne se limite nullement à la version décrite à titre d'exemple et illustrée par les schémas en annexe; qui plus est, de nombreuses variantes de forme et de dimension de ce type de conteneur-citerne et des éléments qui le composent sont possibles, sans qu'elles ne sortent du cadre de la présente invention.

Revendications:

1.      Conteneur-citerne     pour     camion-citerne, caractérisé en ce que sur la première extrémité de la citerne est articulé un vérin culbuteur (12) pourvu en sa partie inférieure d'un mécanisme d'accouplement (19) conçu pour être connecté à un châssis roulant 11 afin de former un point d'appui approprié pour le vérin culbuteur, et en ce que   la seconde extrémité de la citerne-conteneur (1) est munie de dispositifs en forme de tenons ou de chevilles (35-36) pivotant dans des mortaises ( 37-38) dont est équipé le châssis roulant (11) susmentionné, et formant ainsi les points d'articulation du conteneur-citerne (1).

2.      Conteneur-citerne     pour     camion-citerne, caractérisé en ce que sa partie inférieure est   munie, aux angles tout au moins, de dispositifs (2) à (5) autorisant sa fixation sur un support tel qu'un châssis roulant (11), lesdits dispositifs (2) à (5) étant chacun attaché à la paroi même de la citerne par l'intermédiaire d'un élément en forme de tunnel.

3.      Conteneur-citerne selon la revendication 1, caractérisé en ce que la citerne (1) présente à une extrémité un logement (13) aménagé dans son corps, dans lequel le vérin culbuteur est installé.

4.      Conteneur-citerne selon la revendication 1 ou 3, caractérisé en ce que ledit logement (13) occupe l'ensemble ou presque de la hauteur et décrit en coupe horizontale une forme en U.

5.      Conteneur-citerne selon la revendication 1, 3 ou 4, caractérisé en ce que le vérin culbuteur est suspendu dans le logement (13) à l'aide de tourillons.

6. Conteneur-citerne selon une des revendications précédentes, caractérisé en ce que l'extrémité inférieure du vérin culbuteur (12), en l'occurence l'extrémité libre du sa tige de piston, s'articule sur le mécanisme d'accouplement (19) par l'intermédiaire de tourillons (17-18).

7. Conteneur-citerne selon la revendication 6, caractérisé en ce que le mécanisme d'accouplement (19) est formé par un châssis (20) offrant principalement appui à deux tenons verticaux pivotants (21-22) qui, en leur partie inférieure, font saillie par rapport au châssis (20) et y présentent une tête rectangulaire élargie (23-24), et, sur chacun de ces tenons, par un levier (27-28) s'articulant à son tour sur un levier commun (31) commandé par un cylindre presseur (31).

8. Conteneur-citerne selon la revendication 7, caractérisé en ce qu'au moins un des leviers (27-28) présente une saillie (29-30) qui, lorsque le vérin culbuteur (12) se trouve en position de retrait, se place au-dessus d'une butée (33-34) prévue dans le logement (13).

9. Conteneur-citerne selon la revendication 2, caractérisé en ce que chaque élément en forme de tunnel (7) (10) est formé d'une partie horizontale touchant la paroi de la citerne et une des extrémités libres de cette partie, et par une seconde partie d'inclinaison oblique raccordée à la paroi de la citerne et située dans un plan qui coupe la partie centrale verticale de la citerne (1) à hauteur de la paroi de cette dernière.

*Fig. 1*

*Fig. 14*

*Fig. 15*

0158375

Fig.8

F 10

Fig.12

F13

Fig.2

9/6

Fig. 3

Fig. 4

Fig. 7

Fig. 11

Fig.5

*Fig. 6*

0158375

*Fig.10*

*Fig.13*

*Fig.9*

## 0158375
Numéro de la demande

**RAPPORT DE RECHERCHE EUROPEENNE**

Office européen
des brevets

EP 85 20 0281

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | FR-A-2 092 417 (CARMICHAEL) <br> * Page 2, lignes 18-35; page 3, lignes 19-27 * | 1 | B 60 P 3/22 |
| A | GB-A-1 100 139 (TAMPLIN) <br><br> * Page 2, lignes 36-58 * | 1,2,3, 4 | |
| A | FR-A-1 056 084 (L'ALUMINIUM FRANCAIS) | | |

| | | | DOMAINES TECHNIQUES RECHERCHES (Int. Cl.4) |
|---|---|---|---|
| | | | B 60 P 3/22 |

Le présent rapport de recherche a été établi pour toutes les revendications

| Lieu de la recherche | Date d'achèvement de la recherche | Examinateur |
|---|---|---|
| LA HAYE | 17-06-1985 | SCHMITTER J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82